Europäisches Patentamt

European Patent Office

Office européen des brevets

(19)

(11) Veröffentlichungsnummer: **0 269 054 B1**

(12) **EUROPÄISCHE PATENTSCHRIFT**

(45) Veröffentlichungstag der Patentschrift: 26.06.91

(21) Anmeldenummer: 87117266.4

(22) Anmeldetag: 24.11.87

(51) Int. Cl.⁵: **B01D** 35/30, B01D 29/88, B01D 27/08, F01M 11/03

(54) **Filteranordnung zum Reinigen von flüssigen Betriebsstoffen, insbesondere des Schmieröles von Brennkraftmaschinen.**

(30) Priorität: 27.11.86 DE 3640531

(43) Veröffentlichungstag der Anmeldung:
01.06.88 Patentblatt 88/22

(45) Bekanntmachung des Hinweises auf die
Patenterteilung:
26.06.91 Patentblatt 91/26

(84) Benannte Vertragsstaaten:
**DE ES FR GB IT SE**

(56) Entgegenhaltungen:
**DE-A- 2 326 212**
**DE-A- 3 432 855**
**US-A- 3 779 388**
**US-A- 4 615 812**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Eiterer, Helmut**
**Oberbergstrasse 21**
**A-4522 Sierning(AT)**

(74) Vertreter: **Bücken, Helmut**
**Bayerische Motoren Werke Aktiengesellschaft Postfach 40 02 40 Petuelring 130 - AJ-30**
**W-8000 München 40(DE)**

## Beschreibung

Die Erfindung bezieht sich auf eine Filteranordnung gemäß dem Oberbegriff des Hauptanspruches.

Aus der DE-PS 25 55 420 ist eine Filteranordnung mit an einem Sockel einstückig angeordneten Filtergehäuse bekannt, bei dem ein am freien Ende angeordneter Verschlußdeckel durch eine zentrale Schraube gesichert ist. Vor einem Wechsel des Filtereinsatzes wird durch Lösen der Schraube ein Durchgang zwangsläufig geöffnet, über den das Schmieröl im Innern des Filtergehäuses in die Ölwanne einer Brennkraftmaschine ablaufen kann. Das Bauprinzip dieses Sockels mit einem durch Lösen einer Schraube zwangsläufig öffnenden Durchgang ist ingeeignet für die Adaption eines Wechselfilters, bei dem Gehäuse und Filtereinsatz eine Montageeinheit bilden.

Eine Filteranordnung mit einem im wesentlichen stehen en einem Sockel angeordneten Wechselfilter ist aus der DE-PS 33 44 568 bekannt. Im Bauprinzip des Sockels dieser Filteranordnung ist ein durch eine lösende Drehbewegung des Wechselfilters zur Entleerung zwangsläufig öffnender Durchgang vorgesehen, der durch ein geradlinig bewegtes Ventil gesteuert wird. Da zur Aufsteuerung weiterer Ablaufbohrungen im Filtergehäuse die lösende Drehbewegung des Wechselfilters zu einem Abheben von der Dichtung zwischen Wechselfilter und Sockel zwangsläufig führt, müssen die Zulaufbohrungen zum Schmitzölraum des Wechselfilters durch Rückschlagventile verschließbar sein. Der damit verbundene zusätzliche Bauaufwand einerseits und die Möglichkeit der Trennung des Wechselfilters vom Sockel vor der endgültigen Entleerung von Öl andererseits zeigen für diese Sockelgestaltung erhebliche Nachteile.

Die vorgenannten Nachteile gelten auch für eine aus der DE-OS 34 32 855 bekannten Filteranordnung mit einem Wechselfilter. Bei dieser bekannten Anordnung wird der bei der lösenden Drehbewegung des Wechselfilters zwangsläufig öffnende Durchgang mittels eines Schiebers gesteuert. Nach einem Ausführungsbeispiel ist der Schieber längsbeweglich und nach einem anderen Ausführungsbeispiel drehbeweglich angeordnet.

Der Erfindung liegt die Aufgabe zugrunde, für eine gattungsgemäße Filteranordnung eine für jede Filterbauart geeignete Sockelgestaltung aufzuzeigen, mit der unabhängig von der Filterbauart ein zwangsläufig öffnender Durchgang zum Entleeren des Filters erzielt wird, wobei die Sockelgestaltung ferner für ein auf längere Serviceintervalle abgestimmtes, relativ großes Filter eine platzsparende und bedienfreundliche Anordnung ermöglichen soll.

Diese Aufgabe wird mit den kennzeichnenden Merkmalen des Hauptanspruches gelöst. Mit der erfindungsgemäßen Ausbildung des Sockels als Drehgelenk oder Drehschubgelenk kann die zwangsläufige Öffnung des Durchganges zum Entleeren des Filters unabhängig von der jeweiligen Filterbauart gewählt werden. Damit kann diese Sockelgestaltung einerseits für nach Anspruch 9 mit einem Sockelteil einstückig ausgebildete Filtergehäuse und andererseits nach Anspruch 10 für an einem Sockelteil montierbare Wechselfilter verwendet werden. Unabhängig davon kann der zwangsläufig zu öffnende Durchgang je nach Gestaltung des Drehgelenkes bzw. des Drehschubgelenkes nach Anspruch 2 über relativ zueinander bewegte Umfangsflächen und nach Anspruch 13 über relativ zueinander bewegte Stirnflächen der das Drehgelenk oder das Drehschubgelenk bildenden Sockelteile gesteuert werden. Diese Sockelgestaltung mit einem Gelenk ergibt ferner für eine Filteranordnung an einer Brennkraftmaschine den Vorteil, das Filter in Betriebstellung der Brennkraftmaschine nahe benachbart anzuordnen. Damit kann für die Filteranordnung eine die Auswirkungen der dynamischen Belastungen surch die betriebene Brennkraftmaschine reduzierende Position gewählt werden, derart, daß zusätzliche Abstützungen entfallen können. Dies ist insbesondere für auf lange Serviceintervalle entsprechend groß gestaltete Filter von besonderem Vorteil. Mit der schwenkbaren Filteranordnung kann ferner ein eingeschränkter Anbauraum bestmöglich ausgenutzt werden. Ein Drehschubgelenk bietet hierbei den weiteren Vorteil einer zusätzlichen axialen Bewegung der Filteranordnung. Diese kann in Verbindung mit einer Schwenkbewegung oder ohne der Schwenkbewegung durchgeführt werden. Es sind jedoch auch gleichzeitig die axiale Schubbewegung und die Schwenkbewegung möglich. Vorteilhafte Ausgestaltungen eines Drehgelenkes nach Anspruch 11 oder eines Drehschubgelenkes nach Anspruch 12 sind in den Unteransprüchen 3 mit 8 beschrieben. Für ein weiteres Drehgelenk nach Anspruch 11 mit einem über relativ zueinander bewegte Stirnflächen der Sockelteile gesteuertem Durchgang ist eine bevorzugte Ausgestaltung im Anspruch 14 angegeben.

Ein besonderer Vorteil der erfindungsgemäß ausgebildeten Filteranordnung ist auch darin zu sehen, daß ein in Entleerungsstellung geschwenktes Filter der jeweiligen Bauart bis zue restlosen Entleerung in betriebsmäßig geschlossenem Zustand verblieben kann. Bei einer Filteranordnung mit einem in ein Filtergehäuse einsetzbaren Filtereinsatz bedeutet dies, daß der Verschlußdeckel des Filtergehäuses oder seine Befestigung vor dem restlosen Entleeren nicht gelöst werden muß. Bei einer Filteranordnung mit einem am Sockel montierbaren Wechselfilter bedeutet dies, daß dieses erst nach restlosem Entleeren vom Sockel abgeschraubt zu werden braucht und damit die eingangs genannten, bauaufwendigen Rückschlagventile entfallen. Die erfindungsgemäße Filteranordnung ermöglicht somit ein relativ sauberes und umweltfreundliches Handling beim Filterwechsel.

Die Erfindung ist anhand von in der Zeichnung dargestellten Ausführungsbeispielen beschrieben. Es zeigen:

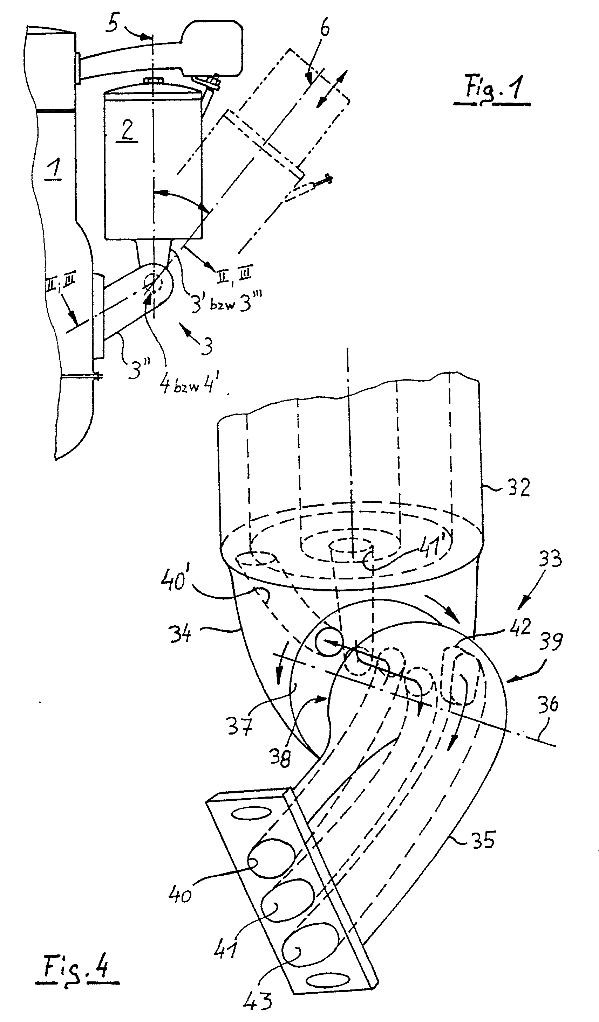

Fig. 1    ein an einer Brennkraftmaschine angeordnetes Filter, das über einen als Drehgelenk oder Drehschubgelenk ausgebildeten Sockel von einer Betriebsstellung in eine Entleerungsstellung schwenkbar ist,

Fig. 2    einen Schnitt gemäß der Linie II-II durch die Filteranordnung nach Fig. 1, wobei das filterseitige Sockelteil des Drehgelenkes mit einem Filtergehäuse in einstückiger Verbindung steht,

Fig. 3    einen Schnitt gemäß der Linie III-III in der Filteranordnung nach Fig. 1, wobei der Sockel als Drehschubgelenk ausgebildet ist und der filterseitige Sockelteil mit einem montierbaren Wechselfilter verbunden ist,

Fig. 4    eine weitere Filteranordnung mit einem Sockel, bei dem der zur Entleerung dienende Durchgang über relativ zueinander bewegte Stirnflächen der Sockelteile gesteuert ist.

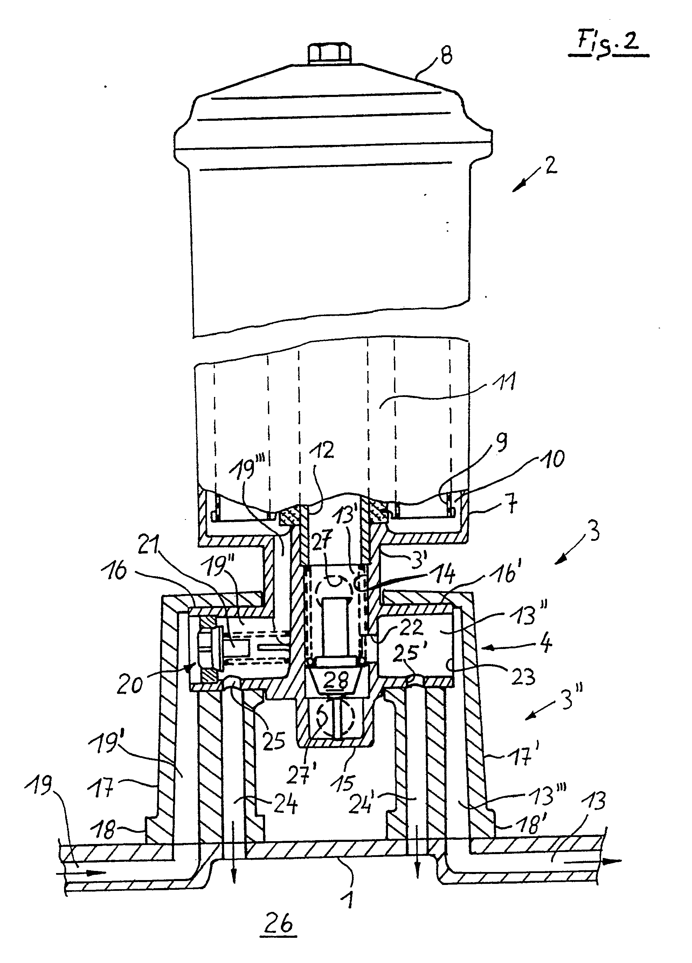

An einer Brennkraftmaschine 1 ist ein Filter 2 zur Reinigung des Schmieröles über einen Sockel 3 angeordnet. Der Sockel 3 umfaßt ein Drehgelenk 4 bildende Teile 3' und 3", die relative zueinander verschwenkbar sind. Damit kann das Filter 2 aus einer im wesentlichen stehenden Betriebsstellung 5 durch Verschwenken in eine geneigte Entleerungsstellung 6 gebracht werden. Durch die relativ zueinander bewegbaren Sockelteile 3' und 3" wird mit dem Verschwenken des Filters 2 in die Entleerungsstellung 6 im Drehgelenk 4 ein in Fig. 2 dargestellter Durchgang aufgesteuert, d.h. zwangsläufig geöffnet.

Das aus Fig. 2 erkennbare Filter 2 umfaßt ein Filtergehäuse 7, das mit dem Sockelteil 3' in einstückiger Verbindung steht. Das Filtergehäuse 7 weist am entgegenesetzten, freien Ende eine durch einen Deckel 8 verschließbare Montageöffnung auf, über die ein Filtereinsatz 9 montiert wird. Der Filtereinsatz 9 teilt das Innere des Filtergehäuses 7 in einen Schmutzölraum 10 und in einen Reinölraum 11. Aus dem Reinölraum 11 fließt das gereinigte Schmieröl über ein Ablaufrohr 12 einem Ablaufkanal 13 zu, dessen erster Abschnitt 13' von einer Ausnehmung 14 in einem Fortsatz 15 am Sockelteil 3' gebildet ist. Am Fortsatz 15 des Sockelteils 3' sind miteinander fluchtende und hohl gestaltete Gelenkzapfen 16,16' angeordnet. Die Gelenkzapfen 16 und 16' des filterseitigen Sockelteiles 3' greifen in Lagerböcke 17 und 17' des maschinenseitigen Sockelteiles 3" ein. Die Lagerböcke 17 und 17' sind zum Anschluß an die Maschine 1 mit Flanschen 18 und 18' ausgerüstet.

An einen maschinenseitigen Schmutzöl-Zulaufkanal 19 schließt sich im Lagerbock 17 ein Kanalabschnitt 10' an. Der Kanalabschnitt 19' im Lagerbock 17 steht mit dem hohlen, einen Kanalabschnitt 19" bildenden Gelenkzapfen 16 über eine stirnseitige Öffnung 20 ölführend in Verbindung. Die Öffnung 20 des Gelenkzapfens 16 wird über ein Rücklaufsperrventil 21 gesteuert. Weiter steht der hohle Gelenkzapfen 16 über einen Kanalabschnitt 19‴ mit dem Schmutzölraum 10 des Filtergehäuses 7 in Verbindung.

Ablaufseitig schließt sich an den im Fortsatz 15 angeordneten Ablaufkanal 13' über eine Durchbrechung 22 der hohle Gelenkzapfen 16' als Kanalabschnitt 13" an. Aus diesem tritt das Reinöl über eine stirnseitige Öffnung 23 des Gelenkzapfens 16' in einen Kanalabschnitt 13‴ des Ablauf- bzw. Reinkanals 13 ein, wobei der Kanalabschnitt 13‴ im Lagerbock 17' angeordnet ist.

Mit der vorbeschriebenen Abfolge der einzelnen Kanalabschnitte für den Schmutzöl-Zulaufkanal 19 und Reinöl-Ablaufkanal 13 ist zugleich die Durchströmrichtung des Schmieröles durch das Filter 2 in Betriebsstellung 5 aufgezeigt. Die in Fig. 2 gezeigte Schnittdarstellung gibt jedoch das Filter 2 in seiner Entleerungsstellung 6 an, wobei kein Schmieröldurchsatz erfolgt. Da eine Entleerung des Schmutzöles aus dem Schmutzölraum 10 des Filtergehäuses 7 im wesentlichen durch das Rücklaufsperrventil 21 behindert ist, wird durch eine im Gelenkzapfen 16 angeordnete und in Entleerungsstellung 6 des Filters 2 mit einem Entleerungskanal 24 im Lagerbock 17 korrespondierende Wanddurchbrechung 25 ein Durchgang geschaffen vom Schmutzölraum 10 des Filters 2 in den Kurbelraum 26 der Brennkraftmaschine 1. Zusätzlich ist ablaufseitig im Gelenkzapfen 16' eine Wanddurchbrechung 25' vorgesehen, die mit einem Entleerungskanal 24' im Lagerbock 17' korrespondiert und vor allem zur Entleerung des Ablaufrohres 12 dient.

Der Ablauf-Kanalabschnitt 13' im Fortsatz 15 des filterseitigen Sockelteiles 3' kann einen Vorlaufanschluü 27 sowie einen Rücklaufanschluß 27' für einen nicht gezeigten Schmiermittelkühler äufweisen. In der Ausnehmung 14 des Fortsatzes 15 bzw. im Kanalabschnitt 13' ist hierfür ein Thermostatventil 28 angeordnet, das ab einer vorbestimmten Temperatur mit zunehmender Erwärmung des Schmieröles die Durchbrechung 22 zum Ablaufkanal 13 aufsteuert.

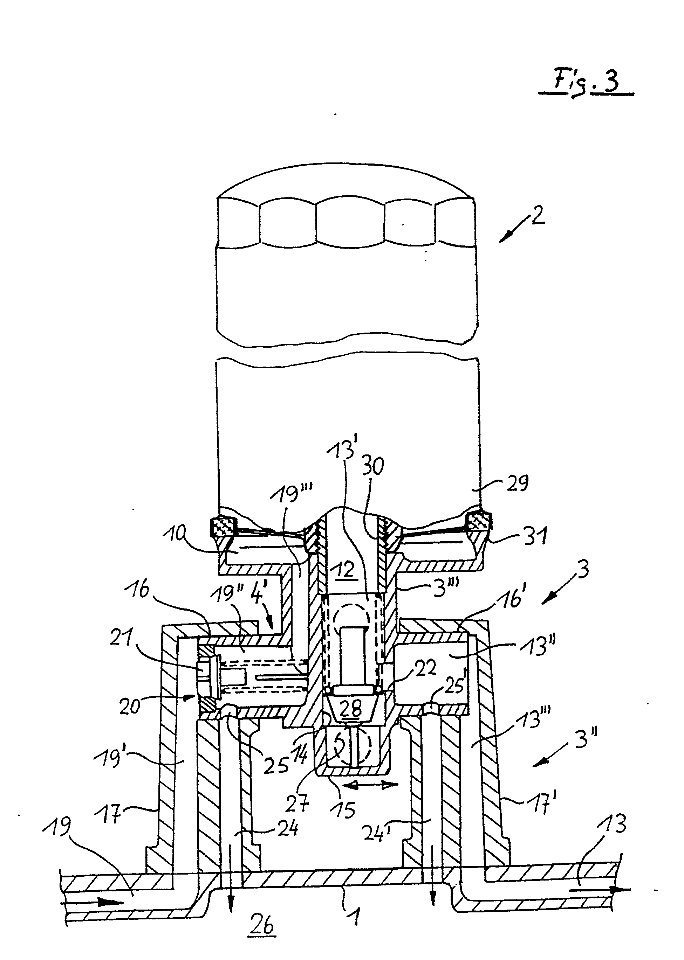

Beim Ausführungsbeispiel der Fig. 3 sind mit dem Ausführungsbeispiel der Fig. 2 identische Teile mit denselben Bezugsziffern belegt. Abweichend vom Ausführungsbeispiel der Fig. 2 zeigt die Fig. 3 einen die Gelenkzapfen 16,16′ tragenden Sockelteil 3‴, der zur Anordnung eines Wechselfilters 29 am filterseitigen Ende des Fortsatzes 15 mit einem Gewindestutzen 30 und ferner mit einem konzentrischen Bund 31 für eine Dichtungsanordnung des Wechselfilters 29 ausgerüstet ist. Damit ist gezeigt, daß ein in der Bauart abweichendes Filter keinen Einfluß auf die erfindungsgemäße Schmierölsteuerung in der gelenkigen Verbindung der einen Sockel 3 bildenden Teile hat.

Weiter ist bei dem Ausführungsbeispiel nach Fig. 3 der eine Freiheitsgrad des Drehgelenkes um einen weiteren Freiheitsgrad einer axialen Verschiebbarkeit erweitert zu einem Drehschubgelenk 4′. Dies ermöglicht, das Filter 2 bzw. das Wechselfilter 29 bei schwierigen Anbauverhältnissen an der Brennkraftmaschine 1 entweder über eine Drehschubbewegung aus der Betriebsstellung 5 in eine geneigte Entleerungsstellung 6 zu bringen oder das Filter 2 durch eine ausschließliche Verschiebebewegung in eine zur Betriebsstellung 5 parallel Entleerungsstellung zu verschieben. Für den letztgenannten Fall sind die für den Durchgang dienenden Wanddurchbrechungen 25 und 25′ in den hohlen Gelenkzapfen 16 und 16′ in Betriebsstellung 5 des Filters 2 bzw. des Wechselfilters 29 von den jeweiligen Mündungen der Entleerungskanäle 24 und 24′ in den Lagerböcken 17 und 17′ axial beabstandet.

In Fig. 4 ist ein Filter 32 über einen Sockel 33 an eine nicht gezeigte Maschine anschließbar, wobei das filterseitige Sockelteil 34 und das maschinenseitige Sockelteil 35 um eine Drehachse 36 schwenkbar und über Stirnflächen 37 und 38 gegeneinander axial verspannbar angeordnet sind. In den ein Drehgelenk 39 bildenden Sockelteilen 34 und 35 sind Zulaufkanäle 40 und 40′ sowie Ablaufkanäle 41,41′ angeordnet, die in Betriebsstellung des Filters 32 über in den Stirnflächen 37 und 38 liegenden Mündungen miteinander korrespondieren. In der Entleerungsstellung des Filters 32 korrespondieren Mündungen des Zulaufkanales 40′ und des Ablaufkanales 41′ in der filterseitigen Stirnfläche 37 mit einer Mündung 42 in der maschinenseitigen Stirnfläche 38 eines Entleerungskanales 43. Mittels der Mündung 42 des Ablaufkanales 43 wird somit ein über relativ zueinander bewegte Stirnflächen 37 und 38 der Sockelteile 34 und 35 gesteuerter Durchgang vom Inneren des Filters 32 zu einem Ölraum der nicht gezeigten Maschine geschaffen.

**Ansprüche**

1. Filteranordnung zum Reinigen von flüssigen Betriebsstoffen, insbesondere des Schmieröls von Brennkraftmaschinen,
   - mit einem im wesentlichen stehend an einem Sockel (3,33) angeordneten, bewegbaren Filter (2,32) und
   - im Sockel ausgebildeten, für Zulauf, Ablauf und Entleerung dienenden Kanälen,
   - wobei ein mit der Bewegung des Filters zur Entleerung zwangsläufig öffnender Durchgang vorgesehen ist,
   dadurch gekennzeichnet,
   - daß der Sockel (3,33) ein Drehgelenk (4,39) oder ein Drehschubgelenk (4′) bildende Teile (3′,3″ bzw. 3′,3‴; 34,35) mit einer zum stehenden Filter (2,32) quer gerichteten Drehachse (36) umfaßt und
   - das an einem der Sockelteile (3′,34) angeordnete Filter (2,32) aus einer fixierbaren Betriebsstellung (5) relativ zum anderen Sockelteil (3″,35) in eine Entleerungsstellung (6) bewegbar ist,
   - wobei der Durchgang über die relativ zueinander bewegten Sockelteile gesteuert ist.

2. Filteranordnung nach Anspruch 1, dadurch gekennzeichnet, daß der Durchgang über relativ zueinander bewegte Umfangsflächen der Sockelteile (3′,3″) gesteuert ist.

3. Filteranordnung nach Anspruch 2, dadurch gekennzeichnet,
   - daß ein Sockelteil (3′,3‴) miteinander fluchtende und hohlgestaltete Gelenkzapfen (16,16′) aufweist, und
   - daß jeder Gelenkzapfen in Betriebsstellung (5) des Filters (2) einen Abschnitt (19″,13″) eines Zulaufkanales (19) oder eines Ablaufkanales (13) bildet,
   - daß ferner die Gelenkzapfen (16,16′) für Durchgänge dienende Wanddurchbrechungen (25,25′) aufweisen,
   - die in Entleerungsstellung (6) des Filters (2) mit im anderen Sockelteil (3″) angeordneten Entleerungskanälen (24,24′) korrespondieren.

4. Filteranordnung nach Anspruch 3, dadurch gekennzeichnet,
   - daß die Gelenkzapfen (16,16′) jeweils am freien Ende stirnseitig eine Öffnung (20,23) aufweisen, und
   - daß jede stirnseitige Öffnung mit einem im anderen Sockelteil (3″) angeordneten Abschnitt (19′,13‴) des Zulaufkanales (19) oder des Ablaufkanales (13) betriebsmittelführend in Verbindung steht.

5. Filteranordnung nach Anspruch 4, dadurch gekennzeichnet,
   - daß in der Öffnung (20) des zulaufseitigen Gelenkzapfens (16) ein Ventilsitz angeordnet ist,
- der mit einem im Gelenkzapfen angeordneten Rücklaufsperrventil (21) zusammenwirkt.

6. Filteranordnung nach den Ansprüchen 3 - 5, dadurch gekennzeichnet,
- daß der die Gelenkzapfen (16,16') tragende Sockelteil (3',3''') filterseitig angeordnet ist, und
- daß die Gelenkzapfen an einem mit einem Ablaufrohr (12) im Filter (2) fluchtenden Fortsatz (15) angeordnet sind,
- der eine mit dem Ablaufrohr (12) in Verbindung stehende Ausnehmung (14) aufweist,
- die über eine Durchbrechung (22) mit dem ablaufseitigen Gelenkzapfen (16') betriebsmittelführend verbunden ist, und
- daß ferner der Fortzatz (15) einen den zulaufseitigen Gelenkzapfen (16) mit dem Innern des Filters (2) verbindenden Anschnitt (19''') des Zulaufkanals (19) aufweist.

7. Filteranordnung nach Anspruch 6, dadurch gekennzeichnet,
- daß die Ausnehmung (14) mit dem Rücklauf (27) eines Betriebsmittelkühlers in Verbindung steht und
- ein in der Ausnehmung angeordnetes Thermostatventil (28) der Steuerung der Durchbrechung (22) dient.

8. Filteranordnung nach den Ansprüchen 3 - 7, dadurch gekennzeichnet,
- daß der andere Sockelteil (3'') auf den Gelenkzapfen (16,16') des filterseitigen Sockelteils (3',3''') anordbare Lagerböcke (17,17') umfaßt,
- die mit Flanschen (18,18') zum Anschluß an eine Maschine (1) ausgerüstet und
- ferner mit gesonderten Kanälen bzw. Kanalabschnitten (24, 24';19';13''') für Zulauf oder Ablauf sowie Entleerung ausgebildet sind.

9. Filteranordnung nach den Ansprüchen 1 - 8, dadurch gekennzeichnet,
- daß der die Gelenkzapfen (16,16') tragende Sockelteil (3') und das Filtergehäuse (7) ein Gußstück bilden,
- wobei das Filtergehäuse an dem Sockelteil (3') entgegengesetzten Ende mit einem Verschlußdeckel (8) ausgerüstet ist.

10. Filteranordnung nach den Ansprüchen 1 - 8, dadurch gekennzeichnet,
- daß der die Gelenkzapfen (16,16') tragende Sockelteil (3'') am filterseitigen Ende des Fortsatzes (15) mit einem Gewindestutzen (30) und
- ferner mit einem konzentrischen Bund (31) für eine Dichtungsanordnung eines Wechselfilters (29) ausgerüstet ist.

11. Filteranordnung nach den Ansprüchen 9 oder 10, dadurch gekennzeichnet, daß das Filter (2,32) aus einer aufrechten Betriebsstellung (5) in eine geneigte Entleerungsstellung (6) schwenkbar ist.

12. Filteranordnung nach einem oder mehreren der Ansprüche 1 - 11, dadurch gekennzeichnet,
- daß der die Gelenkzapfen (16,16') tragende Sockelteil (3''') und der maschinenseitige Sockelteil (3'') durch eine relative axiale Verschiebbarkeit ein Drehschubgelenk (4') bilden, und
- daß die für den Durchgang dienenden Wanddurchbrechungen (25,25') in den hohlen Gelenkzapfen in Betriebsstellung (5) des Filters (2) bzw. des Filtergehäuses (7) bzw. des Wechselfilters (29) von den jeweiligen Mündungen der Entleerungskanäle (24,24') axial beabstandet sind.

13. Filteranordnung nach Anspruch 1, dadurch gekennzeichnet, das der Durchgang zur Entleerung über relativ zueinander bewegte Stirnflächen (37,38) der Sockelteile (34,35) gesteuert ist.

14. Filteranordnung nach den Ansprüchen 11 und 13, dadurch gekennzeichnet,
- daß das filterseitige Sockelteil (34) und das maschinenseitige Sockelteil (35) um eine Drehachse (36) schwenkbar und über Stirnflächen (37,38) gegeneinander axial verspannbar angeordnet sind,
- wobei in Betriebsstellung des Filters (32) in den Stirnflächen Mündungen für Zu- und Ablaufkanäle (40,40';41,41') miteinander korrespondieren, und
- in Entleerungsstellung die Mündungen der Zu- und Ablaufkanäle in der filterseitigen Sritnfläche (37) mit einer Mündung (42) in der maschinenseitigen Stirnfläche (38) eines Entleerungskanales (43) korrespondieren.

**Claims**

1. A filter arrangement for purification of liquid working materials, more particularly the lubricating oil of internal combustion engines, comprising a movable filter (2, 32) disposed substantially vertically on a holder (3, 33) and inflow, outflow and drainage ducts formed in the holder, a passage being provided and automatically opening for drainage when the filter moves, characterised in that the holder (3, 33) comprises parts (3', 3" or 3', 3'''; 34, 35) forming a hinge joint (4, 39) or a turning and sliding joint (4'), with an axis of rotation (36) extending transversely to the vertical filter (2, 32), and the filter (2, 32), which is disposed on one of the holder parts (3', 34), is movable relative to the other holder part (3", 35) from a lockable operating position (5) into a drainage position (6), the passage being controlled via the holder parts which are movable relative to one another.

2. A filter arrangement according to claim 1, characterised in that the passage is controlled via peripheral surfaces of the holder parts (3', 3") which are moved relative to one another.

3. A filter arrangement according to claim 2, characterised in that a holder part (3', 3''') has aligned, hollow pivot pins (16, 16') and each pivot pin, in the operating position (5) of the filter (2), forms a portion (19", 13") of an inflow duct (19) or an outflow duct (13), and the pivot pins (16, 16') have wall apertures (25, 25') serving as passages and corresponding with drainage ducts (24, 24') disposed in the other holder part (3") when the filter (2) is in the drainage position (6).

4. A filter arrangement according to claim 3, characterised in that the pivot pins (16, 16') have an opening (20, 23) at each free end and each end opening is connected and conveys working material to a portion (19', 13''') of the inflow duct (19) or of the outflow duct (13) disposed in the other holder part (3").

5. A filter arrangement according to claim 4, characterised in that a valve seat is disposed in the opening (20) of the pivot pin (16) on the inflow side and co-operates with a non-return valve (21) disposed in the pivot pin.

6. A filter arrangement according to claims 3 - 5, characterised in that the holder part (3', 3''') carrying the pivot pin (16, 16') is disposed on the filter side and the pivot pins are disposed on a prolongation (15) in alignment with an outflow pipe (12) in the filter (2), the prolongation having a recess (14) connected to the outflow pipe (12) and being connected to and supplying working material via an aperture (22) to the pivot pin (16') on the outflow side, and the prolongation (15) comprises a portion (19''') of the inflow duct (19) which connects the inflow-side pivot pin (16) to the interior of the filter (2).

7. A filter arrangement according to claim 6, characterised in that the recess (14) is connected to the return flow (27) of a working-medium cooler and the aperture (22) is controlled by a thermostat valve (28) disposed in the recess.

8. A filter arrangement according to claims 3 - 7, characterised in that the other holder part (3") comprises bearing blocks (17, 17') for disposing on the pivot pins (16, 16') of the filter-side socket part (3', 3"), the bearing blocks being equipped with flanges (18, 18') for connecting to an engine (1) and also equipped with separate ducts or duct portions (24, 24'; 19'; 13''') for inflow or outflow and drainage.

9. A filter arrangement according to claims 1 - 8, characterised in that the holder part (3') carrying the pivot pins (16, 16') forms a single casting with the filter housing (7), the filter housing having a cover (8) at the end opposite the holder part (3').

10. A filter arrangement according to claims 1 - 8, characterised in that the holder part (3''') carrying the pivot pins (16, 16') has a threaded nozzle (30) at the filter end of the projection (15), and also has a concentric collar (31) for sealing-tight attachment of an easy-change filter (29).

11. A filter arrangement according to claim 9 or 10, characterised in that the filter (2, 32) is pivotable from an upright operating position (5) into an inclined drainage position (6).

12. A filter arrangement according to one or more of claims 1 - 11, characterised in that the holder part (3''') carrying the pivot pins (16, 16') is axially movable relative to the holder part (3") on the engine side and thus forms a turning and sliding joint (4') and the wall apertures (25, 25') serving as a passage in the hollow pivot pins are at an axial distance from the respective valves of the drainage ducts (24, 24') when the filter (2) or the filter housing (7) or the easy-change filter (29) is in the operating position (5).

13. A filter arrangement according to claim 1, characterised in that the passage for drainage is adjusted via relatively movable end faces (37, 38) of the holder parts (34, 35).

14. A filter arrangement according to claims 11 and 13, characterised in that the holder part (34) on the filter side and the holder part (35) on the engine side are pivotable around an axis (36) and can be axially clamped to one another via end faces (37, 38), and when the filter (32) is in the operating position, mouths for inflow and outflow ducts (40, 40'; 41, 41') in the end faces correspond to one another, and in the emptying position the mouths of the inflow and outflow ducts in the filter-side end face (37) correspond to a mouth (42) in the engine-side end face (38) of an emptying duct (43).

**Revendications**

1. Dispositif de filtration pour nettoyer des produits de fonctionnement fluides, en particulier d'huiles de lubrification de moteurs à combustion interne comprenant :
   - un filtre (2, 32) disposé de façon sensiblement verticale sur un socle (3, 33) et pouvant bouger,
   - des canaux servant à l'alimentation, l'écoulement et la vidange, ménagés dans le socle,
   - un passage s'ouvrant dans un sens étant prévu pour la vidange lors du déplacement du filtre,
   caractérisé en ce que,
   - le socle (3, 33) comprend des parties (3', 3"), respectivement (3', 3'''), (34, 35), formant une articulation (4, 39) ou un tiroir rotatif (4') avec un axe de rotation (36) dirigé perpendiculairement au filtre (2, 32) vertical et
   - le filtre (2, 32) disposé sur l'une des parties du socle (3', 34) peut être déplacé depuis une position de fonctionnement (5) par rapport à l'autre partie du socle (3", 35) et amené en position de vidange (6),
   - le passage à travers les parties du socle mobiles qui se correspondent est commandé.

2. Dispositif de filtration selon la revendication 1, caractérisé en ce que le passages des faces des parties (3', 3") du socle se déplaçant l'une par rapport à l'autre est commandé.

3. Dispositif de filtration selon la revendication 2, caractérisé en ce que :
   - une partie (3', 3''') du socle comporte des pivots (16, 16') de forme creuse et
   - chaque pivot en position de fonctionnement (5) du filtre (2) constitue une section (19", 13") d'un canal d'alimentation (19) ou d'un canal d'écoulement (13),
   - en outre les pivots (16, 16') comportent des perçages de paroi (25, 25') servant de passages,
   - ceux-ci dans la position de vidange (6) du filtre (2) correspondent aux canaux de vidange (24, 24') disposés dans l'autre partie (3") du socle.

4. Dispositif de filtration selon la revendication 3, caractérisé en ce que:
   - les pivots (16, 16') présentent chacun à leur extrémité libre du côté frontal un orifice (20, 23),
   - chaque orifice frontal est en liaison avec une section (3") du canal d'alimentation (19) ou du canal d'écoulement (13), disposée dans l'autre partie (3") du socle, pour conduire le fluide de fonctionnement.

5. Dispositif de filtration selon la revendication 4, caractérisé en ce que :
   - un siège de soupape est disposé dans l'orifice (20) du pivot (16) situé du côté de l'alimentation,
   - ce siège coopère avec un clapet de non-retour (21) disposé dans le pivot.

6. Dispositif de filtration, selon les revendications 3 à 5, caractérisé en ce que :
   - la partie (3', 3''') du socle supportant les pivots (16, 16') est disposée du côté du filtre et
   - les pivots sont disposés sur un appendice (15) s'alignant sur un tuyau d'écoulement (12) dans le filtre (2),
   - cet appendice (15) présente un évidement (14) se trouvant en liaison avec le tuyau d'écoulement (12),
   - l'évidement (14) est relié au pivot (16') situé du côté de l'écoulement pour conduire le fluide de fonctionnement et
   - en outre l'appendice (15) présente une section (19''') du canal d'écoulement (19) reliant le pivot (16) situé du côté de l'alimentation avec l'intérieur du filtre (2).

7. Dispositif de filtration selon la revendication 6, caractérisé en ce que :
   - l'évidement (14) est en relation avec le circuit de retour (27) d'un réfroidisseur des fluides de fonctionnement et

- une valve thermostatique (28) disposée dans l'évidement sert à commander le passage (22).

8. Dispositif de filtration selon les revendications 3 à 7, caractérisé en ce que :
- l'autre partie (3") du socle comporte des paliers (17, 17') pouvant être associés aux pivots (16, 16') de la partie (3', 3''') du socle située du côté du filtre,
- ces paliers sont munis de flasques (18, 18') pour être raccordés à un moteur (1),
- en outre ils sont équipés de canaux particuliers ou de sections de canaux (24, 24', 19', 13''') servant à l'alimentation, ou à l'écoulement, ainsi qu'à la vidange.

9. Dispositif de filtration selon les revendications 1 à 8, caractérisé en ce que :
- la partie (3') du socle supportant les pivots (16, 16') et le corps (7) du filtre forment une pièce de fonderie,
- le corps du filtre, à son extrémité opposée à la partie (3') du socle étant équipée d'un couvercle (8) de fermeture.

10. Dispositif de filtration selon les revendications 1 à 8, caractérisé en ce que :
- la partie (3''') du socle supportant les pivots (16, 16') est équipée à l'extrémité de l'appendice (15) située du côté du filtre d'un raccord fileté (30) et
- en outre avec une liaison concentrique (31) pour un montage étanche d'un filtre interchangeable (19).

11. Dispositif de filtration les revendications 9 ou 10, caractérisé en ce que le filtre (2, 32) peut pivoter d'une position de fonctionnement (5) verticale dans une position inclinée de vidange (6).

12. Dispositif de filtration selon une ou plusieurs des revendications 1 à 11, caractérisé en ce que:
- la partie (3''') du socle supportant les pivots (16, 16') et la partie (3") du socle, située du côté du moteur, forment une articulation tournante et coulissante, grâce à la possibilité de se déplacer axialement l'une par rapport à l'autre et
- les perçages de paroi (25, 25') servant de passage ménagées dans les pivots creux en position de fonctionnement (5) du filtre (2) ou du corps (7) du filtre ou du filtre interchangeable (29) sont axialement écartés des différents orifices des canaux de vidange (24, 24').

13. Dispositif de filtration selon la revendication 1, caractérisé en ce que le passage servant à la vidange est commandé par les faces frontales (37, 38) se déplaçant l'une par rapport à l'autre des parties (34, 35) du socle.

14. Dispositif de filtration selon les revendications 11 et 13, caractérisé en ce que :
- la partie (34) du socle située du côté du filtre et la partie (35) du socle située du côté du moteur sont disposées de façon à pouvoir pivoter sur un axe de rotation (36) et peuvent venir s'épauler axialement l'une contre l'autre par leurs faces frontales (37, 38),
- des orifices pour les canaux d'alimentation et d'écoulement (40, 40', 41, 41') pratiquées dans les faces frontales se correspondant les uns les autres, lorsque le filtre (32) est en position de fonctionnement et
- lorsqu'il est en position de vidange les orifices des canaux d'alimentation et d'écoulement pratiqués dans la face frontale (37) située du côté du filtre, correspondent alors à un orifice (42) pratiqué dans la face frontale (38) située du côté du moteur d'un canal de vidange (43).

_Fig.1_

_Fig.4_

_Fig. 2_

Fig.3